(19) Europäisches Patentamt / European Patent Office / Office européen des brevets

(11) **EP 3 771 885 A1**

(12) **EUROPEAN PATENT APPLICATION**

(43) Date of publication:
**03.02.2021 Bulletin 2021/05**

(21) Application number: **19189154.8**

(22) Date of filing: **30.07.2019**

(51) Int Cl.:
**G01B 11/25** (2006.01) **G01B 11/06** (2006.01)
**G06T 7/521** (2017.01) **G06T 7/586** (2017.01)
**G06T 7/593** (2017.01) G01N 13/02 (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Université Libre de Bruxelles
1050 Bruxelles (BE)**

(72) Inventors:
- **VAN VAERENBERGH, Stephan
  1473 GLABAIS (BE)**
- **TZEVELECOS, Wassilis
  1050 BRUXELLES (BE)**

(74) Representative: **Pronovem
Office Van Malderen
Avenue Josse Goffin 158
1082 Bruxelles (BE)**

(54) **REFRACTIVE PROFILOMETRY**

(57) The present invention is related to a method for determining the surface profile and thickness of a transparent material on a reference surface or not, comprising the steps of:

a. projecting through the surface, a pattern on said reference surface;

b. taking through the transparent object surface at least two pictures of the projected pattern;

c. determining the apparent displacement of features of the pattern relative to the projected pattern without said transparent object;

d. based upon said displacement, determining the surface profile and thickness of said object.

Figure 1

## Description

### Field of the Invention

The present invention is related to a method for determining the shape of the surface and/or thickness of a transparent object.

### Background

In many scientific and industrial applications the monitoring of transparent liquid/solid shape gives different useful information. For liquids, meniscus curvature is linked to capillary pressure in liquid-vapour systems and contact angle to surface tension. Capillary pressure is the driving force in many scientific and industrial processes and the possibility to measure it in a non-intrusive and simple way is of extreme interest. Profilometry is a well know technique to measure shape and dimensions of solid objects but cannot be applied to transparent object as it is. Projection in these objects is effected by refraction and internal reflections and the signal recorded has to be processed taking into account all these effects with respect to solid profilometry processing algorithms.

The prior art discloses strategies developed to allow meniscus curvature detection: one example is to treat liquid interfaces as a solid making it diffusing the light, for instance using paint or contaminating the transparent liquid with a standard, highly concentrated titanium dioxide pigment paste. This trick allows the use of standard algorithm used in Fringe Projection Profilometry (FPP) or to combine it with Digital Image Correlation (DIC) algorithm. A second option is to use low concentration of Rhodamine 610 making the liquid fluorescent to a laser light sheet and recording images with a camera from the side.

When liquids cannot be contaminated, mainly two different techniques are available in the literature: topography with Digital Image Correlation as described by F. Moisy et Al. in "Measurement by digital image correlation of the topography of a liquid interface", (ISFV13 - 13th International Symposium on Flow Visualization, Nice, France 2008) and stereo-refraction, as described by Guillaume Gomit, et Al. in "Free surface measurement by stereo-refraction", (16th International Symposium on Application of Laser Techniques to Fluid Mechanics, Lisbon, Portugal 2012).. Both of these methods present a random pattern on the reference plane resulting in less intrusive process than the other process, but it remains intrusive in as much as a reference pattern on a known reference surface is needed under the transparent liquid.

Zhang et al., in "Development of a Digital Image Projection Technique to Measure Wind-Driven Water Film Flows", (51st AIAA Aerospace Science Meeting, Grapevine, Texas 2013) are the first to propose a completely non-intrusive Digital Image Projection technique for transparent liquids but the technique can only be used for very thin film of liquid without detecting contact angles and requires previous calibration that is not always possible to perform. This limits the possible application of the Zhang et al. technique.

Hata et Al., in "shape extraction of transparent object using genetic algorithm" (Proceedings of ICPR '96) describes a method wherein a pattern is projected on a reference surface behind a transparent object for determining the shape of said transparent object. In order to be able to reconstruct the shape of the object, it is needed in the described method to know the precise position and shape of the reference surface, as well as the boundary position, so that the method is not applicable for situation wherein the boundary is not in the image. (i.e. observation of waves on a lake,...)

Therefore, there is a need for a non-invasive device able to determine surface profile of transparent objects, avoiding prior art drawbacks.

### Summary of the Invention

A first aspect of the present invention is related to a method for determining the surface profile and thickness of a transparent material on a reference surface, with camera(s) and projector(s) on the same side with respect to the analysed object, comprising the steps of:

> a. projecting through the surface profile of the transparent material, at least one pattern on said reference surface;
> b. taking through the surface at least two pictures of the projected pattern(s) by means of at least one camera;
> c. for all pictures of the projected patterns, determining the apparent displacement of features of the recorded pattern pictures relative to the projected patterns pictures without said transparent material;
> d. based upon said displacement, determining the surface profile and/or thickness of said surface.

A second aspect of the present invention is related to a method for direct transmission use, where the analysed object is placed between the projector(s) and the camera(s) and comprising the following steps:

> a. projecting on a virtual surface between the projector and the object at least one pattern;

b. taking through the virtual surface at least two pictures of the projected pattern(s) by means of at least one camera;

c. for all pictures of the projected patterns, determining the apparent displacement of features of the recorded pattern images relative to the projected pattern(s) without said transparent material;

d. based upon said displacement, determining the surface profile and thickness of said surface.

Advantageously, the step of taking at least two pictures of the projected pattern(s) on the reference surface is performed by one of the following methods:

(i) one camera is displaced at two or more separate positions to take two or more pictures of the projected pattern at different angles;

(ii) Two or more cameras at two or more separate positions are used simultaneously to take two or more pictures of the projected pattern at different angles;

(iii) the pattern is projected at least at two different wavelengths, the projected patterns being separated by wavelength filtering, the difference of refractive indexes giving rise to different displacements;

(iv) two or more patterns are projected simultaneously or sequentially from different angles.

Considering the configuration in direct transmission mode, the step of taking at least two pictures of the projected pattern(s) on the virtual surface is performed by one of the following methods:

(i) the pattern is projected at least at two different wavelengths, the projected patterns being separated by wavelength filtering, the difference of refractive indexes giving rise to different displacements;

(ii) two or more patterns are projected simultaneously or sequentially at different wavelengths.

In the case of two patterns projected simultaneously, they are preferably projected at different wavelengths so that they can be separated by wavelength filtering.

According to preferred embodiment, the method of the invention further comprises one, or a suitable combination of at least two of the following features:

- the pattern(s) is (are) a periodic pattern;
- the periodic pattern(s) is (are) a bidirectional periodic pattern;
- the pattern is selected form the group consisting of a chessboard, a double fringed grid, a dots grid, a Ronchi grid and a random pattern;
- the reference surface is a light diffusive surface and has a uniform diffusivity;
- the reference surface is a flat plane surface;
- the reference surface have a random shape;
- the object is a sessile liquid drop;
- the volume of said sessile drop is dynamically varied, the dynamic resulting surface shape being iteratively determined for estimating the advancing and/or receding contact angle;
- the object is a transparent or semi-transparent solid;
- the object is liquid film;
- the reference surface is a plate, the transparent material being a liquid wherein the plate is partially immerged;
- the plate is moved and partially put in contact with the liquid, the dynamic resulting surface shape being iteratively determined for estimating the advancing and receding contact angle;
- the transparent material is a liquid wherein a solid object is partially immerged in front of, or above the reference surface, for determining the wettability of said solid object by the liquid;
- the solid object is a single fibre;
- the pattern is projected with light having two or more wavelengths advantageously using at least two equivalent projecting systems with different inclination with respect to the object plane in order to overcome the problem arising from the critical angle, or using a single projecting system having achromatic lenses in order to enhance the precision of the technique.

The method of the invention can advantageously be used for determining wave propagation of liquid free surface.

The method of the invention can advantageously be used for determining both surfaces of the transparent object when used in transmission mode.

A third aspect of the invention is related to a device implementing the method according to the first aspect of the invention comprising:

- a light diffusive reference surface;

- at least one pattern projecting device projecting in use a pattern on the reference surface;
- at least one camera getting in use pictures of the projected pattern on the reference surface,

characterised in that the device comprises either at least two projecting device at different angles or at least two cameras at different angles for determining at least two displacement fields of the projected pattern(s) through a transparent surface.

A fourth aspect of the invention is related to a device implementing the method according to the second aspect of the invention comprising:

- at least two wavelengths projector light source;
- at least one pattern projecting device projecting in use a pattern on the virtual surface between the projector and the object;
- at least one camera getting in use pictures of the projected pattern on the reference surface,

characterised in that the device comprises either at least two projecting device at different angles or at least two cameras at different angles for determining at least two displacement fields of the projected pattern(s) through a transparent surface.

## Figures

Fig. 1 represents a simple Refractive Profilometry setup configuration: the projector (a) is imaging the pattern (b) on the reference (e) passing through the object (d). The pattern is then imaged on the detector of the camera (f) inclined of a fix known angle.

Fig. 2 represents the refraction mechanisms applying inside a drop lying on a flat reference surface.

Fig. 3 represents a refractive configuration with inclined reference.

Fig. 4 represents a refractive configuration with inclined reference and inclined projector.

Fig. 5 represents an example of setup according to the invention with two cameras at different inclinations.

Fig. 6 represents the double refraction algorithm steps to process the camera signal images and convert them into object shape.

Fig. 7 represents another example of setup according to the invention used for lens validation experiment in the example with a tilting mirror.

Fig. 8 represents the reconstructed profile from real signal of the example after 5 iterations.

Fig. 9 represents the reconstructed profile from real signal of the example after 30 iterations

Fig.10 represents the setup configuration in direct transmission mode when the object to be reconstructed is placed between the projector (at least projecting on a virtual surface with two wavelengths) and the camera

## Detailed Description of the Invention

The disclosed optical method allows detecting drop shape, contact angle and meniscus curvature in open systems without contaminating the liquid or inserting a random pattern on the wetted surface. The only requirements are to know the refractive index of the transparent object and of the phase surrounding said liquid and a visualization window from above the transparent object.

The Refractive profilometry here disclosed allows measuring contact angle, shape and depth of transparent object without being invasive. It requires only a visualization window from the top of the investigated object. The technique could also be used to detect the refractive index of transparent object with a known surface and knowing the refractive index of the transparent phase surrounding transparent object.

The method comprises the step of projecting at least one pattern, such as, preferably, a chessboard, a random pattern, a pattern of dots or a double fringed grid like Ronchi grid, of density N on a transparent object laying on a reference surface and recording the projected images with at least one camera above the liquid.

In the present invention, at least two patterns displacements are recorded corresponding to different light paths either by projecting two patterns from different angular positions or by recording the patterns by cameras disposed at different positions. As third alternative, it is also possible to obtain two sets of displacements by projecting two patterns at different wavelength, taking advantage of the different refractive indexes at said different wavelength.

The use of at least two sets of pattern displacement permits to ease the determination of the object profile for example in case of unknown border conditions (for example in the case of continuous liquid surface such as waves propagating on sea surface).

The apparent displacement of features of the pattern relative to the projected pattern without said transparent material is then determined. From the determined displacements, the shape of the liquid is calculated using Snell's law for reversing the optical path of the light beams forming the recorded picture.

In order to simplify the determination of the displacement, the pattern is preferably a periodic pattern or a random pattern. For three-dimensional shaped objects such as a sessile drop, the periodic or non-periodic pattern is a bidirectional periodic or non-periodical pattern. The pattern density is selected with respect to the minimal spatial resolution of the signal of the drop and the maximal spatial resolution depends on the resolution of the Camera detector. In other words, it is preferred to have high density of the pattern where it is expected to have a high curvature of the shape or a random surface of the object.

In order to easily image the projected pattern, the reference surface is a diffusive surface preferably of known shape, and more preferably a neutral flat screen having a uniform diffusive colour, preferably white. The depth profile can be known for any solid reference surface shape. To know the shape of the object the reference surface shape must be known or an additional pattern can be taken to increase the information on the system. The reference surface must be able to image the pattern and can be of any colours.

In the direct transmission mode, the transparent object is placed between the camera and the projector and the pattern is imaged on a virtual image between the projector and the transparent object.

It is preferred to work with camera telecentric objective and collimated projected beams using afocal systems, to avoid lens distortions and beam divergences.

The method of the invention can advantageously be used for determining the shape of a sessile liquid drop. In that case, the volume of said sessile drop can be dynamically varied. As an advantage of the invention, any dynamic process of the shape and contact angle of the drop can be detected; the only limit in temporal resolution is the image acquisition rate of the camera.

Equivalently, the method of the invention can be used to determine the thickness distribution of a transparent object on a reference surface of unknown shape.

The method of the invention can also be used to determine the deformation of a liquid in the vicinity of a plate, for example in a dynamical contact angle experiment. In that case, the reference surface can be the plate, the projection system and the camera being placed at slanted angle relative to the vertical.

An advantage of the method of the invention in comparison with standard goniometer contact angle measurement is the ability to measure local contact angle on the entire contact line between the solid and the liquid. This is of interest of any processes involving evaporation, changing of composition, temperature and electrical field, surface chemical inhomogeneity.

The method of the invention can also be used to determine the deformation of a liquid surface induced by a solid object partially immerged in front of, or above the reference surface. This can for example be used for studying the wettability of a single fibre, or to study the wave field induced by a dynamic floating object.

**Refractive Profilometry (general case)**

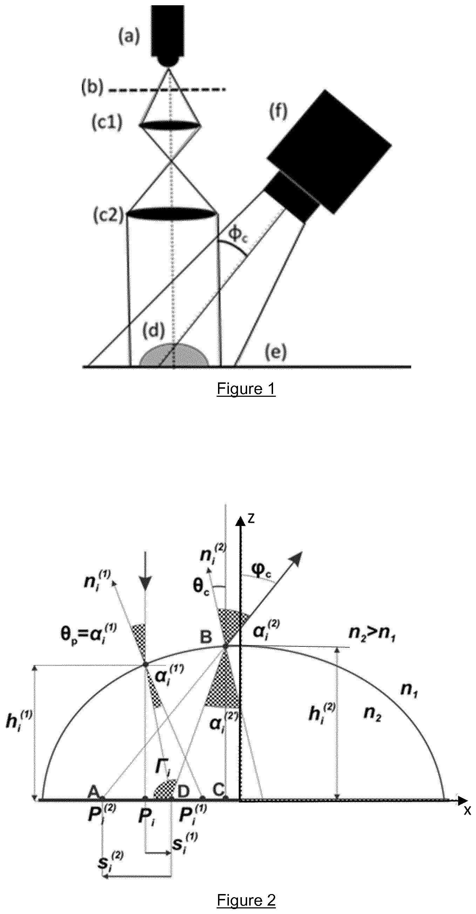

Refractive Profilometry (RP) is an optical technique developed to reconstruct transparent liquid shapes from projected pattern distortion where the pattern is projected on a diffusive reference surface behind the object under investigation. The pattern information coming with the projector beam is firstly distorted by the passage through the object interface and secondly by the passage before being imaged on the camera detector. To explain the mechanism of the RP technique let's refer to Figure 1 where is shown a possible simple configuration where the projector (a) is imagining the pattern (b) with a collimated beam obtained by the afocal system of lenses (c1) and (c2) on the diffusive surface called reference plane (e); the light beam carrying the pattern information is passing through the transparent object (d) with refractive index $n2 > n1$, where $n1$ is the refractive index of the environment. The projected pattern rays are distorted by refraction at the object interface according to Snell law and the distorted pattern imaged on the reference plane (e) is visualized by the camera (f) positioned at a fixed angle $\phi_c$. To be visualized on the camera detector, the light must cross the object interface twice and is so (again) refracted and the final image on the camera detector is so the result of two different refraction distortions. For simplicity, from now until the end of this description, it is referred to the refraction of the beam coming from the projector as "first refraction" and to the one affecting the beam going to the camera as "second refraction".

The main advantage of the RP technique is that the camera(s) and light source(s) can be positioned on the same side of the test object, avoiding installation of a second visualization windows as for interferometry techniques in transmission mode for instance and reducing the intrusion of such optical technique for fluid dynamics investigations where wetting properties are fundamental; the technique works also in direct transmission mode, providing object numerical reconstruction when placed between the projector(s) and the camera systems. The technique with both camera(s) and projector(s) on the same object side works with a diffusive surface contrary to Michelson interferometer that uses light reflections on the object surface or from a mirror. A second but no less important advantage is the possibility to perform dynamic reconstruction of liquids to follow contact angle and depth changes for instance during thermal variation conditions and evaporation phenomena. A third advantage with respect to interferometry is that RP technique allows dynamic reconstruction far beyond the limit of the interferometry in terms of curvature and thickness variations since interferometry is more limited in spatial resolution (that depends on light wavelength).

The core of the RP technique is the Snell model which is the named double Snell model when camera(s) and projector(s) are placed at the same side with repsect to the transparent object to reconstruct. The double Snell model analytically describing the refraction mechanism inside the transparent object: the arrival-imaged point on the reference surface behind the object, is not corresponding to the visualized point on the camera detector because the camera light path is also affected by refraction (second refraction). In other words, the distortion relative to the second refraction is null where the normal of the object surface is aligned with the camera lens axis; in this case the visualized point at the camera detector corresponds at the point position of the projector ray, reached after the first refraction. Similarly, the projector light path is not affected by first refraction for points crossing the interface where the normal is aligned with the light path (or projector lens axis) and so, object slopes corresponding to points affected by only one refraction, cannot be determined a-priori but, even if the pattern was placed behind the object, as in stereo-refraction, the information of slope and object height (or liquid depth) were both "hidden" in the distorted signal visualized by the cameras.

In the RP method here proposed, the scope of the solving algorithm is to minimize a 4-unknown rational trigonometric equation system relating visualized signals with geometrical and physical features of the object (double refraction model) using numerical controllers allowing convergence of the model to the real object shape. In the next sections of this detailed description, the double refraction model will be established for bi-dimensional cases, both for flat and no-flat references. The model has been numerically tested before experimental validation with respect to hardware parameters as camera and projector inclinations and object parameters as contact angle and profile slenderness in order to gives the error dependence with the numerical process. The experimental validation of the technique has been performed using a plano-convex lens with known refractive index and shape, plotting errors in slope and thickness to give an estimation of the real accuracy of the technique. Finally, the model has been extended for measurements considering non-flat geometry, implementing in the model no-flatness condition of the reference, as the sidewalls of a trapezoidal groove.

The man skilled in the art would easily generalise the bidimensional model to real 3D situation.

Refractive Profilometry is based on the equation describing the double refraction mechanism inside transparent objects where refractive index is known a-priori. Figure 2 shows a sketch of the double refraction mechanism inside a transparent drop; the setup configuration is similar to Figure 1 where a projector is imaging perpendicularly ($\phi_p$=0) to the reference plane (axis X) a pattern of points $P_i$ that are then visualized in $P_i^{(2)}$ by a camera inclined of $\phi_c$ with respect to the normal to the reference plane. The projected pattern is preferably collimated and the cameras mount telecentric objectives. To derive the RP equation of the double Snell law, is considered the middle section (XZ plane) of a sessile drop of refractive index $n_2$ in an environment of $n_1$ with $n_2 > n_1$ as shown in Figure 2.

In Figure 2, the geometrical quantities will be marked with (1) and (2) referring respectively to first and second refraction. In Figure 2 the first refraction applies at point of height $\mathbf{h_i^{(1)}}$ while second refraction corresponds to point **B.** It must be noticed that due to camera inclination $\phi_c$, first and second refraction apply at different points on the surface of the drop; otherwise, if the ray entry and exit points crossing the interface were coincident, point $\mathbf{P_i}$ would correspond to point $\mathbf{P_i^{(2)}}$ visualized by the camera. This is why the camera (or projector) inclinations are important to visualize the pattern signal from the reference surface. According to Figure 2, the final point displacement visualized by the camera $\mathbf{S_i}$ for a random i-point is the result of the two refractions:

$$S_i = S_i^{(2)} + S_i^{(1)} \qquad \textbf{(0.1)}$$

where $\mathbf{S_i^{(1)}}$ and $\mathbf{S_i^{(2)}}$ are the displacements on the reference plane corresponding to the first and second refractions. The convention used in the text is to consider the displacements in x-direction positive and anticlockwise angles. According to this convention the angle $\phi_c$ represented in Figure 2 is negative and $s_o$ is the final displacement $\mathbf{S_i}$ too.

Referring to the refraction configuration sketched in Figure 2, $\mathbf{S_i^{(1)}}$ can be written as:

$$S_{(zy)i}^{(1)} = h_i^{(1)} \tan\left(\alpha_{(zy)i}^{(1)} - \alpha_{(zy)i}^{(1')}\right) \qquad \textbf{(0.2)}$$

where $\mathbf{h_i^{(1)}}$ is the height of the drop corresponding to the first refraction and $\alpha_i^{(1')}$, the Snell angle corresponding to $\alpha_i^{(1)}$ and expressed as:

$$\alpha_i^{(1')} = asin\left[\left(sin\,\alpha_i^{(1)}\right)\frac{n_1}{n_2}\right] \qquad \textbf{(0.3)}$$

with **n₁** and **n₂** as the gas and drop refraction index.

The displacement contribution related to the second refraction $\mathbf{S_i^{(2)}}$ is more complex to write and is function of the height $\mathbf{h_i^{(2)}}$ corresponding to point **B**, the camera angle $\phi_c$ and the angle of incidence relative to the second refraction $\alpha_i^{(2)}$. Considering triangles **ABC** and **ABD** in Figure 2, it is possible to write the two following expressions from the Sinus Theorem:

$$AB = \frac{h_i^{(2)}}{sin\left(\frac{\pi}{2} - \varphi_c\right)} \qquad \textbf{(0.4)}$$

$$\frac{AB}{sin(\Gamma_i)} = \frac{S_i^{(2)}}{sin\left(\alpha_i^{(2)} - \alpha_i^{(2')}\right)} \qquad \textbf{(0.5)}$$

where $\alpha_i^{(2')}$ is the Snell angle corresponding to $\alpha_i^{(2)}$ and that can be expressed similarly to $\alpha_i^{(1')}$. The angle $\Gamma_i$ can be written as:

$$\Gamma_i = \frac{\pi}{2} + \varphi_c - \left(\alpha_i^{(2)} - \alpha_i^{(2')}\right) \qquad \textbf{(0.6)}$$

Merging equations (0.4), (0.5) and (0.6), the displacement $\mathbf{S_i^{(2)}}$ can be expressed as:

$$S_i^{(2)} = \frac{h_i^{(2)}\ sin\left(\alpha_i^{(2)} - \alpha_i^{(2')}\right)}{cos\,\varphi_c\,cos\left(\varphi_c - \left(\alpha_i^{(2)} - \alpha_i^{(2')}\right)\right)} \qquad \textbf{(0.7)}$$

Replacing equations (0.2) and (0.7) into (0.1), one obtains the expression for i-point of the double Snell law for the case of a sessile object on a flat surface with perpendicular projector rays and inclined camera:

$$S_i = \frac{h_i^{(2)}\ sin\left(\alpha_i^{(2)} - \alpha_i^{(2')}\right)}{cos\,\varphi_c\,cos\left(\varphi_c - \left(\alpha_i^{(2)} - \alpha_i^{(2')}\right)\right)} + h_i^{(1)}\,tan\left(\alpha_i^{(1)} - \alpha_i^{(1')}\right) \qquad \textbf{(0.8)}$$

In equation (0.8) if the camera inclination is $\phi_c$=0, the final displacement is null as expected as $\mathbf{S_i^{(1)}}$ and $\mathbf{S_i^{(2)}}$ are equal in absolute value and opposite in sign.

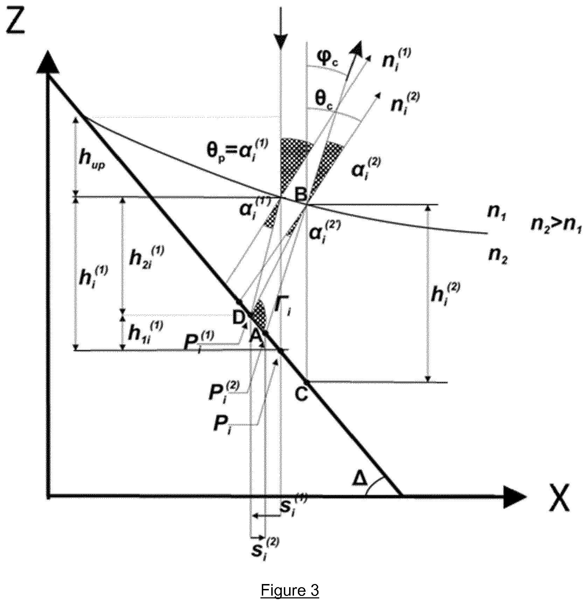

The above described RP technique have been extended to support no flatness cases, for example where the diffusive surface is the bottom of a trapezoidal groove; this is performed using the sketch reported in Figure 3. Projector inclination here is kept null while camera is still inclined of an angle $\phi_c$. Figure 3 the final displacement is determined by equation (0.1) on the virtual reference plane and is positive for the i-point considered.

The expression of displacement $\mathbf{S_i^{(1)}}$ caused by the *first refraction* is obtained by the height $\mathbf{h_i^{(1)}}$ with respect to the inclined reference:

$$h_i^{(1)} = h_{1i}^{(1)} + h_{2i}^{(1)} \qquad \textbf{(0.9)}$$

where $h_{1i}^{(1)}$ and $h_{2i}^{(1)}$, referring to Figure 3 can be expressed as:

$$h_{1i}^{(1)} = S_i^{(1)} \tan \Delta \tag{0.10}$$

$$h_{2i}^{(1)} = \frac{S_i^{(1)}}{\tan\left(\alpha_i^{(1)} - \alpha_i^{(1')}\right)} \tag{0.11}$$

The reference inclination angle $\Delta$ appears in the expression of $h_i^{(1)}$ replacing equations (0.10) and (0.11) into (0.9).

The expression of $S_i^{(1)}$ is then obtained arranging the expression:

$$S_i^{(1)} = h_i^{(1)} \left( \frac{\tan\left(\alpha_i^{(1)} - \alpha_i^{(1')}\right)}{1 + \tan\Delta \tan\left(\alpha_i^{(1)} - \alpha_i^{(1')}\right)} \right) \tag{0.12}$$

$\alpha_i^{(1')}$ is the Snell angle and can be expressed as equation (0.3).

$S_i^{(2)}$ is then similar to the previous case: referring to, considering the triangles **ABC** and **ABD** and applying the *Sinus theorem,* the two expressions are obtained:

$$\frac{AB}{\sin\left(\frac{\pi}{2} - \Delta\right)} = \frac{h_i^{(2)}}{\sin\left(\pi - \left(\frac{\pi}{2} - \Delta\right) - \varphi_c\right)} \tag{0.13}$$

$$\frac{AB}{\sin(\Gamma_i)} = \frac{\left(S_i^{(2)}\right)_{wall}}{\sin\left(\alpha_i^{(2)} - \alpha_i^{(2')}\right)} \tag{0.14}$$

$(S_i^{(1)})_{wall}$ means the displacement $S_i^{(1)}$ projected on the reference surface and is equal to

$$\left(S_i^{(2)}\right)_{wall} = \frac{S_i^{(2)}}{\cos \Delta} \tag{0.15}$$

while angle $\Gamma_i$, considering triangle **ADB** in Figure 3 can be written as

$$\Gamma_{(zy)i} = \pi - \left(\alpha_i^{(2)} - \alpha_i^{(2')}\right) - \left(\pi - B\hat{A}C\right) \tag{0.16}$$

where the angle **B$\hat{\text{A}}$C** is

$$B\hat{A}C = \frac{\pi}{2} - \Delta + \varphi_c \tag{0.17}$$

Replacing equations (0.17) into (0.16) and the obtained expression of $\Gamma_i$ and $(S_i^{(1)})_{wall}$ in equation (0.14):

$$\frac{AB}{sin\left(\frac{\pi}{2} - \varphi_c + \Delta - \left(\alpha_i^{(2)} - \alpha_i^{(2')}\right)\right)} = \frac{\frac{S_i^{(2)}}{cos\,\Delta}}{sin\left(\alpha_i^{(2)} - \alpha_i^{(2')}\right)} \qquad \textbf{(0.18)}$$

Merging equations (0.18) and (0.13), explicating $S_i^{(2)}$, it is obtained that

$$S_i^{(2)} = \frac{h_i^{(2)}\;(cos\,\Delta)^2 \, sin\left(\alpha_i^{(2)} - \alpha_i^{(2')}\right)}{cos(\Delta - \varphi_c)\,cos\left(\Delta - \varphi_c - \left(\alpha_i^{(2)} - \alpha_i^{(2')}\right)\right)} \qquad \textbf{(0.19)}$$

The final displacement for non-flat reference is given substituting into equation (0.1) the expressions of $S_i^{(1)}$ and $S_i^{(2)}$ from equations (0.12) and (0.19):

$$S_i = \frac{h_i^{(2)}\;(cos\,\Delta)^2 \, sin\left(\alpha_i^{(2)} - \alpha_i^{(2')}\right)}{cos(\Delta - \varphi_c)\,cos\left(\Delta - \varphi_c - \left(\alpha_i^{(2)} - \alpha_i^{(2')}\right)\right)} \qquad \textbf{(0.20)}$$
$$+ h_i^{(1)}\left(\frac{tan\left(\alpha_i^{(1)} - \alpha_i^{(1')}\right)}{1 + tan\,\Delta\,tan\left(\alpha_i^{(1)} - \alpha_i^{(1')}\right)}\right)$$

For $\Delta$**=0**, equation (0.20) simplifies to the expression of $S_i$ for flat reference (0.8).

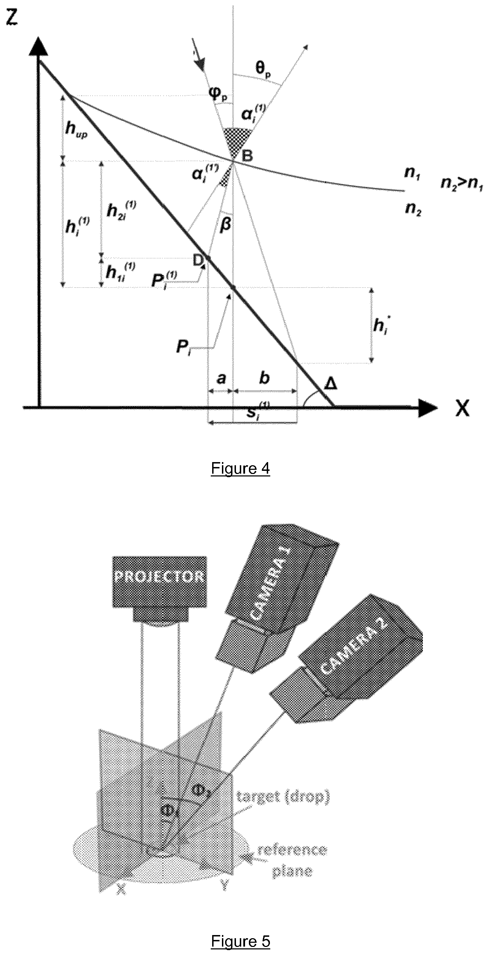

Next and last step is to geometrically determine the expression of the displacement $S_i$ when the inclination of the projector $\phi_p$ is not null. Considering the sketch reported in Figure 4, showing the first refraction with inclined projector beam, $S_i^{(1)}$ can be written as

$$S_i^{(1)} = a + b \qquad \textbf{(0.21)}$$

where **a** and **b** are expressions function of the height $h_i^*$ in Figure 4:

$$a = \left(h_i^{(1)} - \left(S_i^{(1)} - b\right)tan\,\Delta\right)tan\,\beta \qquad \textbf{(0.22)}$$

$$b = \left(h_i^{(1)} + h^*\right)tan\,\varphi_p \qquad \textbf{(0.23)}$$

$$h_i^* = \left(S_i^{(1)} - a\right)tan\,\Delta \qquad \textbf{(0.24)}$$

where $\beta = \alpha_i^{(1)} - \alpha_i^{(1')} - \phi_p$.

**a** and **b** are obtained solving equations (0.22), (0.23) and (0.24):

$$a = \frac{h_i^{(1)} \, tan\,\beta - S_i^{(1)} \, tan\,\Delta\,tan\,\beta + h_i^{(1)} \, tan\,\varphi_p \, tan\,\Delta\,tan\,\beta + S_i^{(1)}(tan\,\Delta)^2 \, tan\,\beta\,tan\,\varphi_p}{1 + (tan\,\Delta)^2 \, tan\,\beta\,tan\,\varphi_p} \qquad \textbf{(0.25)}$$

$$b$$
$$= h_i^{(1)} \tan \varphi_p$$
$$+ S_{(zy)i}^{(1)} \tan \Delta \tan \varphi_p \qquad (0.26)$$
$$- \tan \Delta \tan \varphi_p \left[ \frac{h_i^{(1)} \tan \beta - S_i^{(1)} \tan \Delta \tan \beta + h_i^{(1)} \tan \varphi_p \tan \Delta \tan \beta + S_i^{(1)}(t\;}{1 + (\tan \Delta)^2 \tan \beta \tan \varphi_p} \right.$$

Substituting expressions (0.25) and (0.26) into (0.21) and simplifying, we obtain the displacement $S_i^{(1)}$ for inclined projector:

$$S_i^{(1)} = \frac{h_i^{(1)}(\tan \beta - \tan \varphi_p)}{1 + \tan \Delta \tan \beta - \tan \Delta \tan \varphi_p - (\tan \Delta)^2 \tan \beta \tan \varphi_p} \qquad (0.27)$$

The general expression for final displacement $S_i$, for inclined reference surface and inclined camera and projector is named double refraction equation and is expressed as:

$$S_i = \frac{h_i^{(2)} (\cos \Delta)^2 \sin \left( \alpha_i^{(2)} - \alpha_i^{(2')} \right)}{\cos(\Delta - \varphi_c) \cos \left( \Delta - \varphi_c - \left( \alpha_i^{(2)} - \alpha_i^{(2')} \right) \right)}$$
$$+ \frac{h_i^{(1)}(\tan \beta - \tan \varphi_p)}{1 + \tan \Delta \tan \beta - \tan \Delta \tan \varphi_p - (\tan \Delta)^2 \tan \beta \tan \varphi_p} \qquad (0.28)$$

$$\beta = \alpha_i^{(1)} - \alpha_i^{(1')} - \varphi_p \, . \qquad (0.29)$$

The unknowns in equation (0.28) are $\alpha_i^{(1)}$, $\alpha_i^{(2)}$, $\mathbf{h}_i^{(1)}$ and $\mathbf{h}_i^{(2)}$ while $\phi_\mathbf{p}$ and $\phi_\mathbf{c}$ are measured with previous calibration and $\Delta$ is known a priori.

**Two patterns case and equation resolution**

To solve equation (0.28) it is convenient to replace the terms $\alpha_i^{(1)}$, $\alpha_i^{(2)}$ and $\mathbf{h}_i^{(2)}$ in equation (0.28) respectively with $\theta_i + \varphi_\mathbf{p}$, $\theta_i - \Delta\theta_i - \varphi_\mathbf{c}$ and $\mathbf{h}_i - \Delta\mathbf{h}_i$, where $\theta_i$ is the slope of the object interface corresponding to the first passage, $\Delta\theta_i$ is the difference in slope with respect the horizontal between the first and second meniscus passage, $\mathbf{h}_i = \mathbf{h}_i^{(1)}$ and $\Delta\mathbf{h}_i$ is the difference between $\mathbf{h}_i^{(2)}$ and $\mathbf{h}_i^{(1)}$. The final unknowns become $\theta_i$, $\mathbf{h}_i$, $\Delta\theta_i$ and $\Delta\mathbf{h}_i$; the first two are not depending on camera position and are defined as global unknowns, while the last two are camera unknowns also depending on camera position and therefore function of the camera inclination $\varphi_\mathbf{c}$. Equation (0.28) so modified can be solved by an iterative method following three steps:

i) the algorithm generates an approximated object shape solving equation (0.28) but neglecting the camera unknowns and so $\Delta\mathbf{h_1} = \Delta\mathbf{h_2} = \Delta\theta_1 = \Delta\theta_2 = \mathbf{0}$;
ii) the double refraction mechanisms is simulated with a specific routine using the generated object shape; this step will give a non-zero value for the camera unknowns $\Delta\theta_1$, $\Delta\theta_2$, $\Delta\mathbf{h_1}$ and $\Delta\mathbf{h_2}$;
iii) equation (0.28) is again solved in $\theta_i$, $\mathbf{h}_i$ with camera unknown initial values obtained in the previous step. The process is iterated N-times until the correlation coefficients between the simulated displacements and the real one is close to 1.

In order to obtain convergence of the resolution algorithm, it was discovered that the use of two displacement patterns instead of one was highly efficient. One convenient way to obtain those two patterns is the use of two inclined cameras of $(\varphi_c)_1$ and $(\varphi_c)_2$, as represented in Figure 5, obtaining the following equation system:

$$(S_i)_K = \frac{\boldsymbol{h_i} \ (\cos \varDelta)^2 \ \sin\left(\alpha_i^{(2)} - \alpha_i^{(2')}\right)}{\cos(\varDelta - (\varphi_c)_K) \cos\left(\varDelta - (\varphi_c)_K - \left(\alpha_i^{(2)} - \alpha_i^{(2')}\right)\right)}$$
$$+ \frac{(\boldsymbol{h_i} + (\Delta \boldsymbol{h})_K)(\tan \beta - \tan \varphi_p)}{1 + \tan \varDelta \tan \beta - \tan \varDelta \tan \varphi_p - (\tan \varDelta)^2 \tan \beta \tan \varphi_p} \qquad \textbf{(0.30)}$$

$$\beta = \alpha_i^{(1)} - \alpha_i^{(1')} - \varphi_p \qquad \textbf{(0.31)}$$

$$\alpha_{(zi)}^{(1')} = asin\left[\left(\sin \alpha_i^{(1)}\right)\frac{n_1}{n_2}\right] \qquad \textbf{(0.32)}$$

$$\alpha_i^{(1)} = \boldsymbol{\theta_i} + \varphi_p \qquad \textbf{(0.33)}$$

$$\alpha_i^{(2')} = asin\left[\left(\sin \alpha_i^{(2)}\right)\frac{n_1}{n_2}\right] \qquad \textbf{(0.34)}$$

$$\alpha_i^{(2)} = \boldsymbol{\theta_i} - (\Delta \boldsymbol{\theta_i})_K - (\varphi_c)_K \qquad \textbf{(0.35)}$$

where K=1,2 respectively for camera 1 and 2.

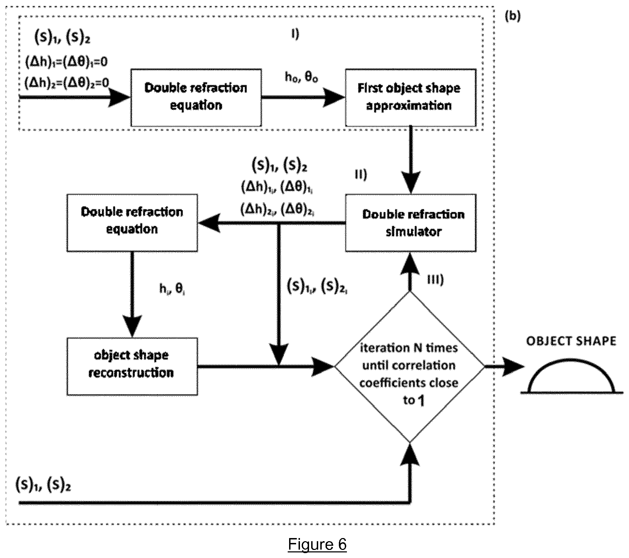

Referring to the block diagram in Figure 6, the processing algorithm aiming to solve the double refraction problem (0.30) - (0.35) using two cameras starts, as mentioned in point i), considering the experimental displacements **(S)₁** and **(S)₂** and the camera unknowns for both cameras, but for the first iteration these values are considered zero (as shown in Figure 6) considering the top part of the block diagram). The software solves the problem (0.30) - (0.35) (considering camera unknowns null) using Levenberg-Marquardt LMA algorithm; this algorithm is also known as the damped least-squares (DLS) method that is used to solve non-linear least squares problems as in the present case. Always referring to Figure 6, the obtained first object shape is deduced from $\boldsymbol{h_0}$ and $\theta_0$ after fitting with polynomial curve (commonly 3rd or 4th degree). The obtained first approximated shape is used as model shape to simulate refraction mechanisms inside the object (knowing refractive index, and reference plane, camera and projector inclinations) at point II) in Figure 6. The output of the simulator provides a first trial for the camera unknowns $(\Delta \mathbf{h})_{1i}$, $(\Delta \mathbf{h})_{2i}$, $(\Delta \theta)_{1i}$, $(\Delta \theta)_{2i}$ that can be used again to solve the double refraction problem (0.30) - (0.35) with the Levenberg-Marquardt to retrieve a more refined value for $\mathbf{h_i}$ and $\theta_i$. When simulating the refractive mechanism in the "double refraction simulator" block at point ii), are also provided the corresponding signals **(S)₁ᵢ** and **(S)₂ᵢ** to the model shape used for the simulation. These values are used to determine cross correlation coefficients (one for each camera signal) at point iii) in order to stop the processing loop refining the final shape solution. The refining loop shown in Figure 6 is repeated N times until the correlation coefficients cross a certain user imposed limit value, and the current shape is considered as the best-reconstructed profile. However, as it will be noticed in the performed tests, it is possible that repeating the refining loop N times one may observe that the cross correlation coefficients diverge after an initial convergence trend; in this case, is considered the reconstructed shape relative to the higher cross correlation coefficients.

Increasing the number of equation is possible by adding an additional pattern image and it will be possible to consider as unknowns also the reference surface plane △.

In addition, knowing the transparent object shape, it will be possible to retrieve the object refractive index equation (0.3).

When working in direct transmission mode, only the first term of the equation (0.3) is used and the amount of unknowns is reduced to 2. The pattern is imaged on a virtual image and there is no need to derive or insert the inclination of the reference surface. The system will consist of a 2 equation in 2 unknowns and can be solved with Newton-Raphson method for 2 variable equations systems.

**Experiment**

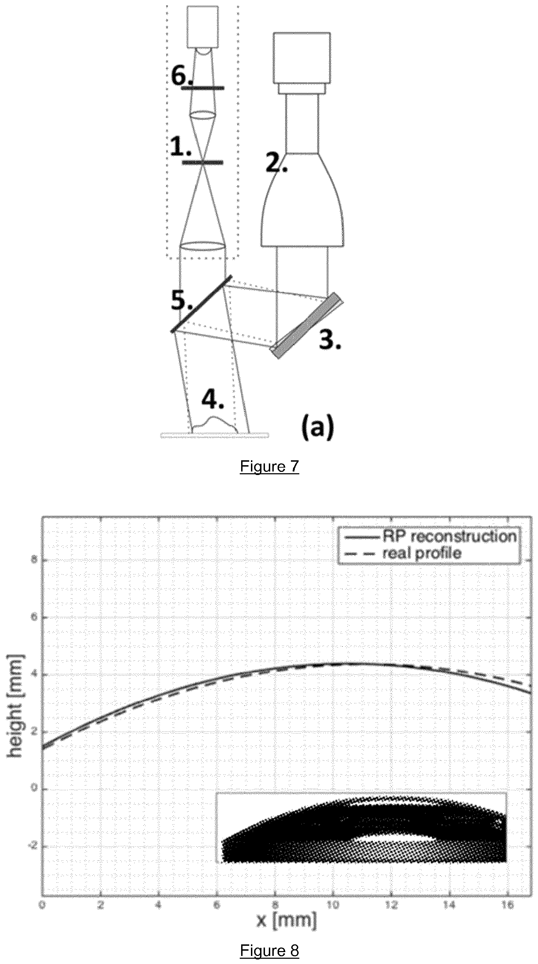

The reconstruction of a plano-convex lens of polycarbonate (figure 8) is performed to validate the double refraction model in determining real transparent object shape. The optical setup used is described Figure 7 and it comprises an afocal system 1 that projects a random pattern on the reference surface, the pattern is visualized by a camera mounting a telecentric objective 2, through the mirror 3 and the beam splitter 5. Tilting the mirror 3, it is possible to collect two images of the projected pattern, needed to reconstruct the transparent sample with the RP algorithm, at different inclinations.

The two selected inclinations have been measured with a calibrated metal object in the FOV of the camera and the resulting angles are -8.03° and -11.43° with respect to the vertical to the reference plane. Since the double refraction model is not implementing the distortion of the image due to the camera lens, it is preferred to mount a telecentric objective with maximum distortion of 0.04% at 588 nm.

The lens to reconstruct is aspherical with a diameter of 22.3 mm, maximum thickness of 4.38 mm and edge step of 1.41 mm; dimensions have been checked with a contact angle measuring setup (OCA 15 from dataphysics with an accuracy on the slope of +/- 0.1 °) taken on a lateral picture of the lens. (see figure 8)

Pattern distortion displacements $S_i$ from experimental data images are obtained with usual displacement measurement routine following the procedure explained in the previous section and the displacement fields are determined for each angle and fitted with a fifth order polynomial surface that better follow the displacement field. Each section of the fitted surface can be processed with the RP algorithm to retrieve the equivalent shape and in order to compare lens slope and thickness of the OCA system with the RP reconstructed one, the lens middle section has been chosen for the reconstruction.

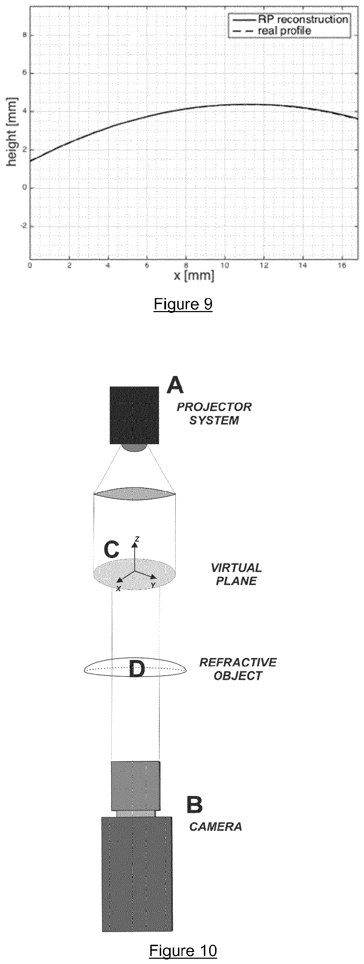

Figure 8 shows the results obtained by the described algorithm after 5 iteration and figure 9 shows the results after 30 iterations. A one can see, the algorithm converges fast to the real profile.

**Claims**

1. Method for determining the surface profile of a transparent object comprising the steps of:

>   a. projecting through the transparent object surface a pattern on a reference surface;
>   b. taking through the surface of the transparent object at least two pictures of the projected pattern by means of at least one camera;
>   c. for all pictures of the projected patterns, determining the apparent displacement of features of the recorded patterns relative to the projected pattern without said transparent material;
>   d. based upon said displacement, determining the surface profile of said surface.

2. Method according to claim 1 wherein the reference surface is a physical surface or a virtual surface, that corresponds to the image surface of the projector system.

3. Method according to claim 1 wherein the step of taking at least two pictures of the projected pattern is performed by one of the following methods:

>   a. Two or more cameras at two or more separate position are used simultaneously or sequentially;
>   b. the pattern is projected at least at two different wavelength, the projected patterns being separated by wavelength filtering, the difference of refractive indexes giving rise to different displacements;
>   c. two or more patterns are projected simultaneously or sequentially from different angles.

4. Method according to any of the previous claims wherein the pattern is selected form the group consisting of a chessboard, a double-fringed grid, a dots grid, a Ronchi grid and a random grid.

5. Method according to any of the previous claims wherein the reference surface is not specular and has a uniform diffusivity.

6. Method according to any of the previous claims wherein the reference surface is a flat plane surface.

7. Method according any of the previous claims wherein the object is a sessile liquid drop.

8. Method according to any of the claims 2 to 5 wherein the reference surface is a plate, the transparent material being a liquid wherein the plate is partially immerged and wherein the plate is moved vertically, the dynamic resulting surface shape being iteratively determined for estimating the advancing and receding contact angle.

9. Method according to any of the claims 2 to 5 wherein the transparent material is a liquid wherein a solid object is partially immerged in front of, or above the reference surface, for determining the wettability of said solid object by the liquid.

10. Method according to claim 9 wherein the solid object is a single fibre.

11. Method according any of the claims 2 to 5 for determining wave propagation of liquid free surface.

12. Method according to any of the previous claims wherein the pattern is projected with light having two or more wavelengths.

13. Method according to claim 12 using at least two equivalent projecting systems with different inclination with respect to the object plane.

14. Device for measuring the surface profile of a transparent material on comprising:

   a. a pattern projector projecting in use a predetermined pattern on a surface below the surface of the transparent material;
   b. taking through the surface at least two pictures of the projected pattern by means of at least one camera;
   c. for all pictures of the projected patterns, determining the apparent displacement of features of the recorded patterns relative to the projected pattern without said transparent material;
   d. based upon said displacement, determining the surface profile of said surface.

Figure 1

Figure 2

Figure 3

Figure 4

Figure 5

Figure 6

Figure 7

Figure 8

Figure 9

Figure 10

Europäisches
Patentamt

European
Patent Office

Office européen
des brevets

**EUROPEAN SEARCH REPORT**

Application Number

EP 19 18 9154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE HONG SEOK ET AL: "Determining the micro-optical element surfaces profiles using transmission deflectometry with liquids", CURRENT APPLIED PHYSICS, NORTH-HOLLAND, AMSTERDAM, NL, vol. 15, no. 3, 3 January 2015 (2015-01-03), pages 302-306, XP029141979, ISSN: 1567-1739, DOI: 10.1016/J.CAP.2015.01.001 * the whole document * ----- | 1-6, 12-14 | INV. G01B11/25 G01B11/06 G06T7/521 G06T7/586 G06T7/593 ADD. G01N13/02 |
| X | MORRIS N J W ET AL: "Dynamic Refraction Stereo", IEEE TRANSACTIONS ON PATTERN ANALYSIS AND MACHINE INTELLIGENCE, IEEE COMPUTER SOCIETY, USA, vol. 33, no. 8, August 2011 (2011-08), pages 1518-1531, XP011373597, ISSN: 0162-8828, DOI: 10.1109/TPAMI.2011.24 * abstract; figures 1-5,11-13 * ----- | 1-14 | |
| X,D | S. HATA ET AL: "Shape extraction of transparent object using genetic algorithm", PROCEEDINGS OF THE 13TH INTERNATIONAL CONFERENCE ON PATTERN RECOGNITION : AUGUST 25 - 29, 1996, VIENNA, AUSTRIA, 1996, page 684, XP055234378, US DOI: 10.1109/ICPR.1996.547652 ISBN: 978-0-8186-7282-8 * the whole document * ----- -/-- | 1-14 | TECHNICAL FIELDS SEARCHED (IPC) G01B G06T G01N |

The present search report has been drawn up for all claims

| Place of search | Date of completion of the search | Examiner |
|---|---|---|
| Munich | 30 January 2020 | Burkart, Johannes |

EPO FORM 1503 03.82 (P04C01)

page 1 of 2

Europäisches
Patentamt

European
Patent Office

Office européen
des brevets

**EUROPEAN SEARCH REPORT**

Application Number

EP 19 18 9154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/054083 A1 (TECHNOLOGIES NUMETRIX INC [CA]; RODRIGUE SIMON [CA] ET AL.) 12 May 2011 (2011-05-12) | 14 | |
| A | * abstract; claims 1,6,7,11,12; figures 32-35 * * page 40, lines 1-14; figures 30,31 * | 3,13 | |

TECHNICAL FIELDS
SEARCHED      (IPC)

The present search report has been drawn up for all claims

| Place of search | Date of completion of the search | Examiner |
|---|---|---|
| Munich | 30 January 2020 | Burkart, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 771 885 A1**

## ANNEX TO THE EUROPEAN SEARCH REPORT
## ON EUROPEAN PATENT APPLICATION NO.

EP 19 18 9154

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2020

| Patent document cited in search report | Publication date | Patent family member(s) | Publication date |
|---|---|---|---|
| WO 2011054083 A1 | 12-05-2011 | CA 2762637 A1 | 12-05-2011 |
| | | CA 2771727 A1 | 12-05-2011 |
| | | EP 2496910 A1 | 12-09-2012 |
| | | US 2012229606 A1 | 13-09-2012 |
| | | US 2012229816 A1 | 13-09-2012 |
| | | WO 2011054083 A1 | 12-05-2011 |

EPO FORM P0459

For more details about this annex : see Official Journal of the European Patent Office, No. 12/82

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. MOISY et al.** Measurement by digital image correlation of the topography of a liquid interface. *ISFV13 - 13th International Symposium on Flow Visualization,* 2008
- **GUILLAUME GOMIT et al.** Free surface measurement by stereo-refraction. *16th International Symposium on Application of Laser Techniques to Fluid Mechanics,* 2012

- **ZHANG et al.** Development of a Digital Image Projection Technique to Measure Wind-Driven Water Film Flows. *51st AIAA Aerospace Science Meeting,* 2013
- **HATA et al.** shape extraction of transparent object using genetic algorithm. *Proceedings of ICPR '96*